# EUROPEAN PATENT SPECIFICATION

(11) **EP 2 093 444 B1**
(45) Date of publication and mention of the grant of the patent: **25.07.2012**
(21) Application number: 07849787.2
(22) Date of filing: 05.12.2007
(51) Int. Cl.: F16D 3/84, B60B 27/00, F16J 3/04, F16J 15/52

(54) **JOINT ASSEMBLY, AND TOTAL ASSEMBLY OF BEARING DEVICE HAVING THE JOINT ASSEMBLY AND ADAPTED FOR USE FOR DRIVE WHEEL**
GELENKANORDNUNG UND GESAMTE LAGERVORRICHTUNGSANORDNUNG MIT DER GELENKANORDNUNG UND GEEIGNET FÜR DIE VERWENDUNG FÜR EIN ANTRIEBSRAD
ENSEMBLE DE JOINT, ET ENSEMBLE COMPLET DE DISPOSITIF DE PALIER AYANT L'ENSEMBLE DE JOINT ET CONÇU POUR UNE UTILISATION POUR UNE ROUE MOTRICE

(30) Priority: 05.12.2006 JP 2006328048
(43) Date of publication of application: 26.08.2009
(73) Proprietor: NTN Corporation, Osaka-shi, Osaka 550-0003 (JP)
(72) Inventor: YAMAUCHI, Kiyoshige NTN CORPORATION, Iwata-shi Shizuoka 438-8510 (JP)
(74) Representative: Cohausz & Florack
(86) International application number: PCT/JP2007/001352
(87) International publication number: WO 2008/068902

(56) References cited:
- JP-A- 57 171 124
- JP-A- 58 193 285
- JP-A- 2000 145 805
- JP-A- 2001 171 308
- JP-A- 2002 039 399
- JP-A- 2005 256 938
- US-A- 5 145 191
- US-A- 5 312 300

## Description

### Field of the Invention

The present invention relates to a joint assembly comprising a constant velocity universal joint on which a unit cover is mounted and a drive shaft connected to the constant velocity universal joint, and to a total assembly of bearing apparatus for a driving wheel, according to the preamble of claim 1 and as it is disclosed in US 5312300 A.

### Description of Background Art

A power transmitting apparatus for transmitting an engine power of vehicle such as an automobile etc. to wheels is required not only to transmit the engine power to wheels but to allow radial and axial displacements and a moment displacement of wheels caused by bounds of wheel or turning of vehicle during running on a rough road. Accordingly an engine side (e.g. a transmission) and a wheel are connected via a drive shaft one end of which is connected to a differential apparatus via a slide type constant velocity universal joint and the other end of which is connected to a wheel via a wheel bearing apparatus including a secured type constant velocity universal joint.

Such a wheel bearing apparatus has been evolved from the first generation type in which a double row rolling bearing is singly used to the second generation type in which an outer member is integrally formed with a body mounting flange. Furthermore, the wheel bearing apparatus has been developed from the second generation type to the third generation type in which one inner raceway surface of the double row rolling bearing is formed on the outer circumference of a hub wheel integrally formed with a wheel mounting flange and then to the fourth generation type in which the hub wheel is integrally formed with a constant velocity universal joint and an outer joint member forming the constant velocity universal joint is formed on its outer circumference with the other inner raceway surface of the double row rolling bearing.

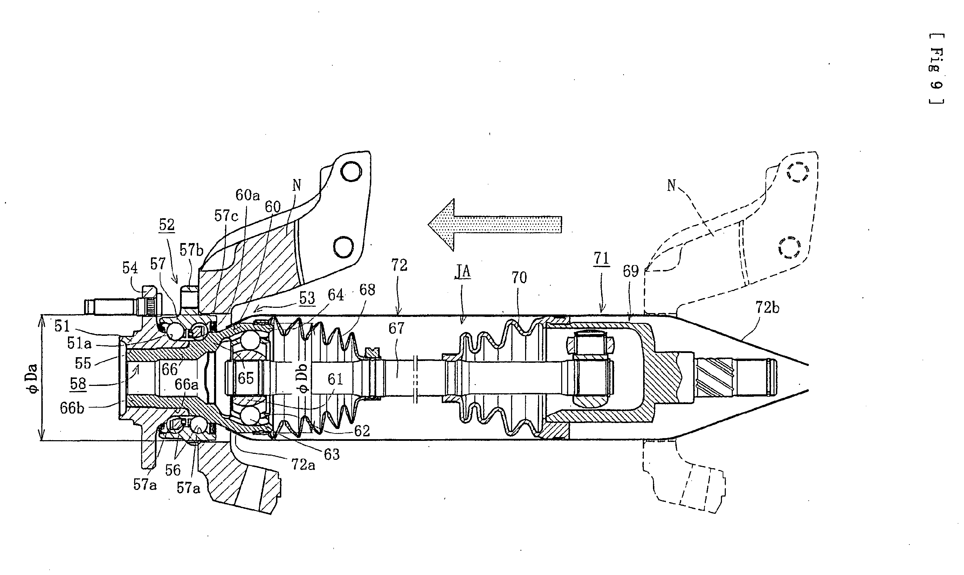

The applicant of this application has proposed the bearing apparatus for a driving wheel of the fourth generation type, the unit cover/joint assembly as well as the total assembly of the bearing apparatus for a driving wheel provided with the unit cover/joint assembly as shown in Fig. 9. In the description below, a term "outer side" (left hand side in the drawings) of the apparatus means a side which is positioned outside of the vehicle body and a term "inner side" (right hand side in the drawings) of the apparatus means a side which is positioned inside of the body when the bearing apparatus is mounted on the vehicle body.

The bearing apparatus for a driving wheel is formed as a unit of a hub wheel 51, a double row rolling bearing 52 and a constant velocity universal joint 53. The hub wheel 51 has at its outer side end a wheel mounting flange 54 and is formed on its outer circumference an outer side inner raceway surface 51a and on its inner circumference with a hardened irregular portion 55.

The double row rolling bearing 52 comprises an outer member 57, an inner member 58 and double row balls 56, 56. The outer member 57 has on its outer circumference a body mounting flange 57b to be mounted on a knuckle N and is formed on its inner circumference with double row outer raceway surfaces 57a, 57a. The inner member 58 comprises the hub wheel 51 and outer joint member 60 of the constant velocity universal joint 53 formed on its outer circumference with inner side inner raceway surface 60a.

The constant velocity universal joint 53 comprises the outer joint member 60, a joint inner ring 61, cage 62, and torque transmitting balls 63. The outer joint member 60 has a cup shaped mouth portion 64, a shoulder portion 65 forming a bottom of the mouth portion 64, and a hollow shaft portion 66 axially extending from the shoulder portion 65. The shaft portion 66 is formed on its outer circumference with a cylindrical portion 66a, and a fitting portion 66b axially extending from the cylindrical portion 66a. The hub wheel 51 and the outer joint member 60 are integrally connected via plastic deformation by inserting the shaft portion 66 into the hub wheel 51 and then by inserting a expanding tool such as a mandrel into the shaft portion 66 and radially expanding the fitting portion 66b to bite them into the irregular portion 55.

This bearing apparatus for a driving wheel is connected to a joint assembly JA. The joint assembly JA comprises a secured type (i.e. axially immovable type) constant velocity universal joint 53 including the outer joint member 60, a drive shaft 67 one end of which is connected to the joint inner ring 61 and a boot 68 mounted on the drive shaft 67 and an opened side outer circumference of the outer joint member 60; and a sliding type constant velocity universal joint 71 including a boot 70 mounted on the drive shaft 67 and an opened side outer circumference of the outer joint member 69. An outer diameter Da of the fitting surface 57c of the outer member 57 is formed larger than that of the constant velocity universal joint 53. A unit cover 72 of elastomer having a substantially cylindrical configuration and reduced diameter portions 72a, 72b at its both ends is mounted so that it covers the outer circumference of the joint assembly JA.

Such a structure enables not only to protect the joint assembly JA but also to makes handling such as transportation easier. In addition the provision of the reduced diameter portions 72a, 72b at both ends of the unit cover 72 enables to elastically mount it on the outer joint member 60 of the constant velocity universal joint 53 and thus to prevent slipping off of the unit cover 72. Accordingly it is possible to provide a joint assembly as well as a total assembly of bearing apparatus for a driving wheel having the joint assembly which can improve the workability in assembling it to a body of vehicle and the quality of the bearing apparatus.
Reference Patent Document 1 Japanese Laid-open Patent Publication No. 256938/2005

### Disclosure of the Invention

### Problems to be solved by the Invention

However in the total assembly of a bearing assembly for a driving wheel of the prior art, since the unit cover 72 is formed as a monolithic structure, there are problems of requiring time not only of mounting the unit cover 72 to the joint assembly JA but also of demounting it therefrom without damaging the boot 68 after completion of mounting the total assembly of bearing apparatus for a driving wheel to a body of vehicle.

It is therefore an object of the present invention to provide a joint assembly as well as a total assembly of bearing apparatus for a driving wheel having the joint assembly which can improve the detachability of the unit cover for protecting the constant velocity universal joint during transportation and assembly to a vehicle and can improve the workability in assembling the total assembly of bearing to a vehicle.

### Means for solving the problems

For achieving the objects of the present invention above, there is provided, according to the present invention of claim 1, a joint assembly comprising a secured type constant velocity universal joint, a slide type constant velocity universal joint, and substantially cylindrical unit covers of elastomer in which the secured type constant velocity universal joint includes one outer joint member formed on its inner circumference with a plurality of curved and axially extending track grooves; a joint inner ring formed on its outer circumference with track grooves oppositely to the track grooves; torque transmitting balls contained within ball tracks formed by the track grooves; a cage for rollably holding the torque transmitting balls within the ball tracks; a drive shaft one end of which being connected to the joint inner ring, and a boot mounted on the drive shaft and on an outer circumference at an opened side of said one outer joint member; the slide type constant velocity universal joint including a boot mounted on said drive shaft and on an outer circumference at an opened side of the outer joint member; and the unit covers having reduced diameter portions and being mounted on the outer circumferences of both the constant velocity universal joints characterized in that each of the unit covers is formed as two parts divided along a parting plane including its axis and has radially extending flat abutting surfaces on the parting plane, and that fastening portions formed on the abutting surfaces and adapted to be engaged via a elastic deformation of them so that the unit covers are detachably mounted on both the constant velocity universal joints.

In the joint assembly of the present invention of claim 1 comprising the pair of constant velocity universal joints, and the drive shaft connecting these universal joints in which the unit cover of elastomer having reduced diameter ends and mounted to cover the outer circumferences of the universal joints, since that each of the unit covers is formed as two parts divided along a parting plane including its axis and has radially extending flat abutting surfaces on the parting plane, and that fastening portions formed on the abutting surfaces and adapted to be engaged via a elastic deformation of them so that the unit covers are detachably mounted on both the constant velocity universal joints, it is possible to easily unite and separate the two piece unit cover and thus to improve the mounting and demounting workability of the total assembly of the bearing apparatus to a vehicle with preventing the assembly from being damaged during its assembly to a vehicle and from being hung down by its own weight during its transportation or handling.

It is preferable as defined in claim 2 that each of said fastening portions comprises a projected portion having a tip of enlarged diameter and a recessed portion having an annular groove formed at a substantially center of an inner diameter portion, and wherein the tip of the projection is adapted to be fitted into the annular groove with the tip elastically expanding the inner diameter portion. This enables to surely prevent separation of the two piece unit cover.

It is also preferable as defined in claim 3 that hooks are formed on the outer circumstances of the abutting surfaces, wherein the hooks and the hooks are arranged at axially offset positions each other. This makes it possible to easily separate the two piece unit cover only by pushing out the hook portions and thus to improve the workability in assembly and separation of the unit cover.

It is preferable as defined in claim 4 that each of said unit covers is formed as having a symmetrical configuration. This makes it possible to use only one set of molds for manufacturing the unit cover and thus to further reduce manufacturing cost and improve the workability in assembly.

For achieving the objects of the present invention above, there is further provided, according to the present invention of claim 5, a total assembly of bearing apparatus for a driving wheel comprising a bearing apparatus for a driving wheel formed as a unit of a hub wheel, a double row rolling bearing, a constant velocity universal joint and an outer joint member integrally connected to the hub wheel via plastic deformation therebetween; and a joint assembly of any one of claims 1~4 connected to the bearing apparatus for a driving wheel in which said double row rolling bearing including an outer member integrally formed on its outer circumstance with a body mounting flange to be mounted on a knuckle and a fitting surface fitted into the knuckle and on its inner circumstance with double row outer raceway surfaces; an inner member comprising the hub wheel integrally formed at its one end with a wheel mounting flange and on its outer circumference with an inner raceway surface opposed to one of the double row outer raceway surfaces, and the outer joint member of the constant velocity universal joint integrally formed with a hollow shaft portion fitted into the hub wheel and on its outer circumference with an inner raceway surface opposed to the other one of the double row outer raceway surfaces, and double rows of rolling elements freely rollably contained between the inner member and the outer member characterized in that a pitch circle diameter of an inner side row of rolling elements of the double rows of rolling elements is set larger than that of an outer side row of rolling elements; and that an outer diameter of a fitting surface of the outer member is formed larger than maximum outer diameters of the joint assembly.

In the total assembly of bearing apparatus for a driving wheel comprising the bearing apparatus for a driving wheel in which the hub wheel and the outer joint member are axially integrally connected via plastic deformation therebetween and a joint assembly connected to the bearing assembly, since that a pitch circle diameter of an inner side row of rolling elements of the double rows of rolling elements is set larger than that of an outer side row of rolling elements; and that an outer diameter of a fitting surface of the outer member is formed larger than maximum outer diameters of the joint assembly, it is possible to reduce the weight and size of the total assembly of the bearing apparatus and to increase the bearing rigidity and thus to extend the life of the bearing assembly. In addition it is possible to easily fit the joint assembly into the knuckle without being damaged, to prevent adhesion of contamination to the total assembly of the bearing apparatus and causing damage thereto, and to keep the total assembly in a mounted condition to the knuckle until completion of assembly corner modules of suspension apparatus and a vehicle. Thus it is possible to further improve not only the handling such as transportation but also the workability in assembly.

### Effects of the Invention

According to the joint assembly of the present invention, since it comprises a secured type constant velocity universal joint, a slide type constant velocity universal joint, and substantially cylindrical unit covers of elastomer in which the secured type constant velocity universal joint includes one outer joint member formed on its inner circumference with a plurality of curved and axially extending track grooves; a joint inner ring formed on its outer circumference with track grooves oppositely to the track grooves; torque transmitting balls contained within ball tracks formed by the track grooves; a cage for rollably holding the torque transmitting balls within the ball tracks; a drive shaft one end of which being connected to the joint inner ring, and a boot mounted on the drive shaft and on an outer circumference at an opened side of said one outer joint member; the slide type constant velocity universal joint including a boot mounted on said drive shaft and on an outer circumference at an opened side of the outer joint member; and the unit covers having reduced diameter portions and being mounted on the outer circumferences of both the constant velocity universal joints and is characterized in that each of the unit covers is formed as two parts divided along a parting plane including its axis and has radially extending flat abutting surfaces on the parting plane, and that fastening portions formed on the abutting surfaces and adapted to be engaged via a elastic deformation of them so that the unit covers are detachably mounted on both the constant velocity universal joints, it is possible to easily unite and separate the two piece unit cover and thus to improve the mounting and demounting workability of the total assembly of the bearing apparatus to a vehicle with preventing the assembly from being damaged during its assembly to a vehicle and from being hung down by its own weight during its transportation or handling.

In addition according to the total assembly of bearing apparatus for a driving wheel of the present invention, it comprises a bearing apparatus for a driving wheel formed as a unit of a hub wheel, a double row rolling bearing, a constant velocity universal joint and an outer joint member integrally connected to the hub wheel via plastic deformation therebetween; and a joint assembly of any one of claims 1~4 connected to the bearing apparatus for a driving wheel in which said double row rolling bearing including an outer member integrally formed on its outer circumstance with a body mounting flange to be mounted on a knuckle and a fitting surface fitted into the knuckle and on its inner circumstance with double row outer raceway surfaces; an inner member comprising the hub wheel integrally formed at its one end with a wheel mounting flange and on its outer circumference with an inner raceway surface opposed to one of the double row outer raceway surfaces, and the outer joint member of the constant velocity universal joint integrally formed with a hollow shaft portion fitted into the hub wheel and on its outer circumference with an inner raceway surface opposed to the other one of the double row outer raceway surfaces, and double rows of rolling elements freely rollably contained between the inner member and the outer member and is characterized in that a pitch circle diameter of an inner side row of rolling elements of the double rows of rolling elements is set larger than that of an outer side row of rolling elements; and that an outer diameter of a fitting surface of the outer member is formed larger than maximum outer diameters of the joint assembly, it is possible to reduce the weight and size of the total assembly of the bearing apparatus and to increase the bearing rigidity and thus to extend the life of the bearing assembly. In addition it is possible to easily fit the joint assembly into the knuckle without being damaged, to prevent adhesion of contamination to the total assembly of the bearing apparatus and causing damage thereto, and to keep the total assembly in a mounted condition to the knuckle until completion of assembly corner modules of suspension apparatus and a vehicle. Thus it is possible to further improve not only the handling such as transportation but also the workability in assembly.

### Best mode for carrying out the Invention

The best mode for carrying out the present invention is a joint assembly comprising a secured type constant velocity universal joint, a slide type constant velocity universal joint, and substantially cylindrical unit covers of elastomer in which the secured type constant velocity universal joint includes one outer joint member formed on its inner circumference with a plurality of curved and axially extending track grooves; a joint inner ring formed on its outer circumference with track grooves oppositely to the track grooves; torque transmitting balls contained within ball tracks formed by the track grooves; a cage for rollably holding the torque transmitting balls within the ball tracks; a drive shaft one end of which being connected to the joint inner ring, and a boot mounted on the drive shaft and on an outer circumference at an opened side of said one outer joint member; the slide type constant velocity universal joint including a boot mounted on said drive shaft and on an outer circumference at an opened side of the outer joint member; and the unit covers having reduced diameter portions and being mounted on the outer circumferences of both the constant velocity universal joints characterized in that each of the unit covers is formed as two parts divided along a parting plane including its axis and has radially extending flat abutting surfaces on the parting plane, that hooks are formed on the outer circumstances of the abutting surfaces and are arranged at axially offset positions each other, that recessed and projected portions are formed on a substantially central portion of the abutting surfaces, a tip of the projected portion being radially expanded and the recessed portion being an annular groove formed on a substantially central portion of the inner circumference of the abutting surface, and that the unit cover can be detachably mounted on the pair of the constant velocity universal joint by abutting the abutting surfaces and engaging them via a elastic deformation of the recessed portions and the projected portions.

### Embodiment

One preferable embodiment of the present invention will be hereinafter described with reference to the drawings.

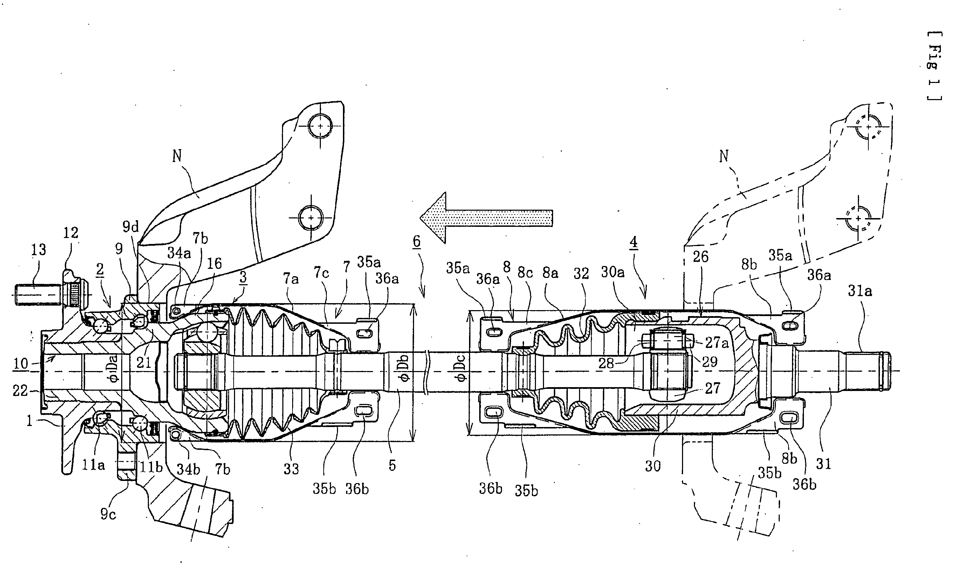

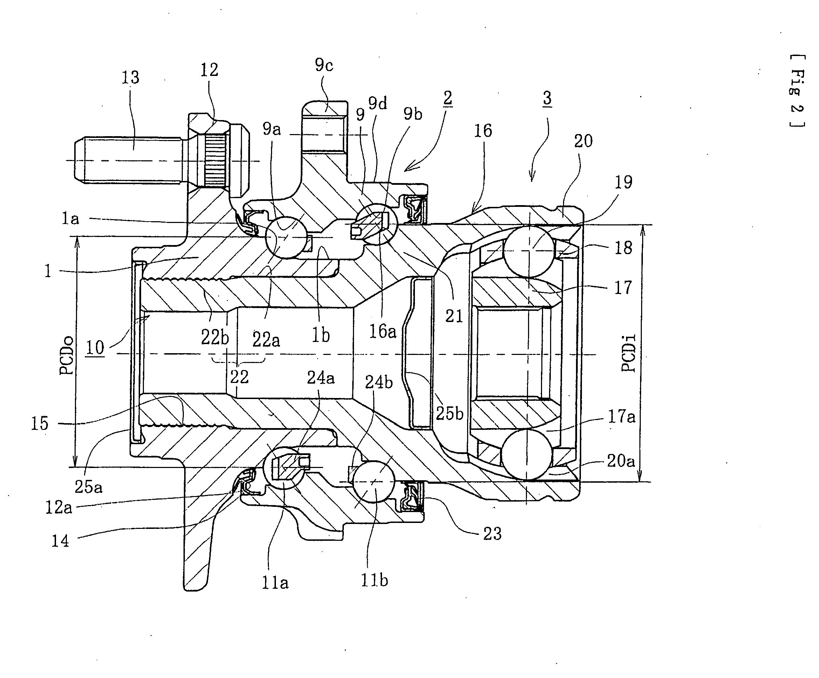

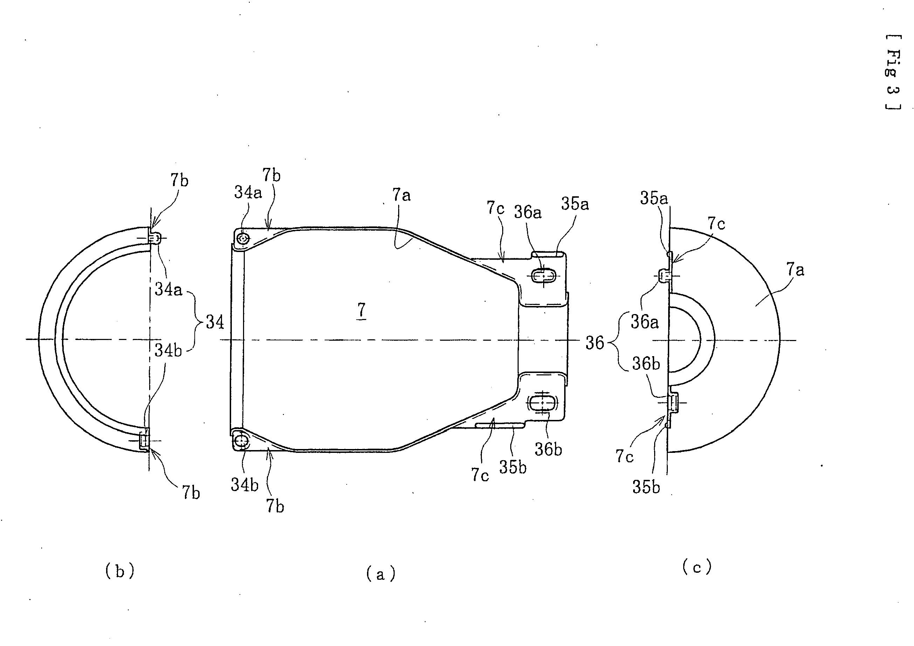

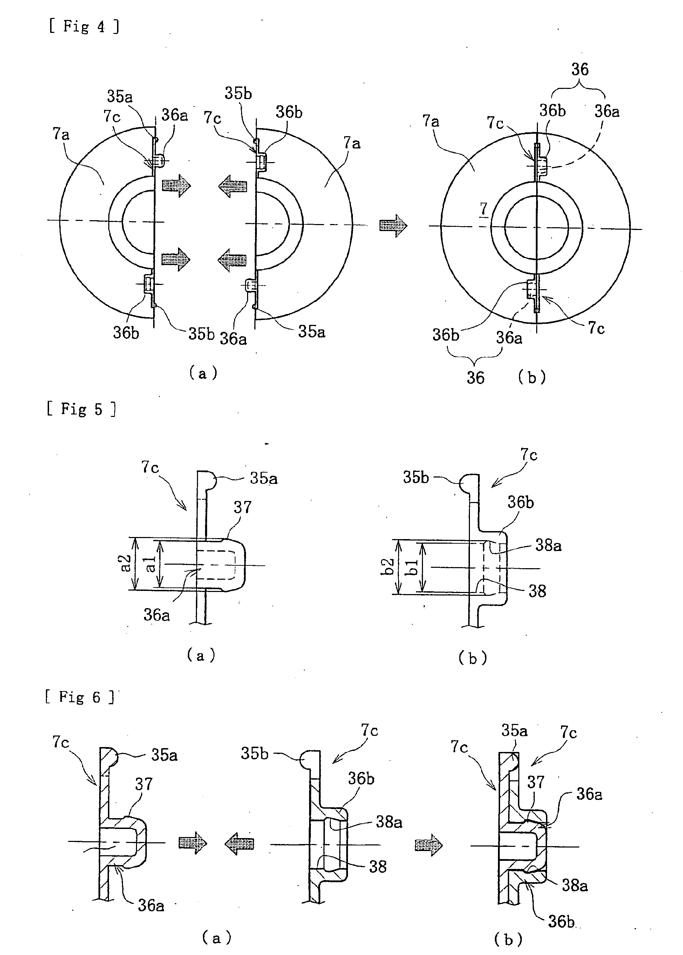

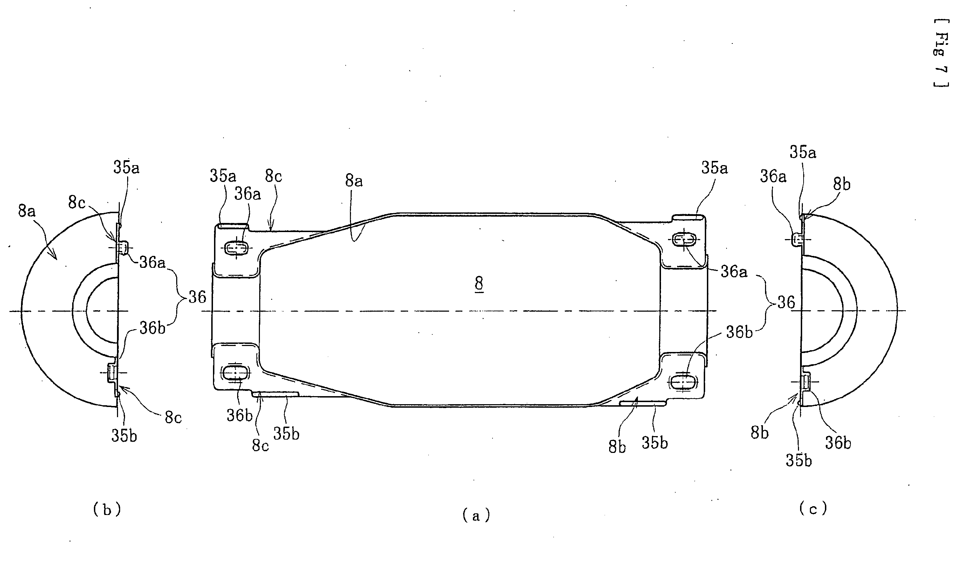

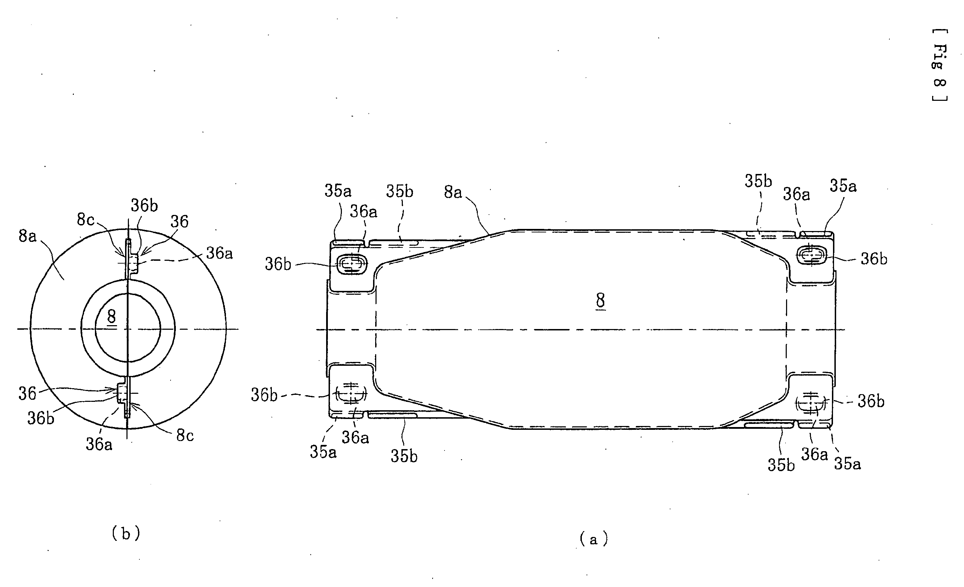

Fig. 1 is a longitudinal section view showing one embodiment of a total assembly of bearing apparatus for a driving wheel on which a unit cover of the present invention is mounted, Fig. 2 is a longitudinal section view showing a bearing apparatus for a driving wheel, Figs. 3 (a), (b) and (c) are respectively a front elevation view, a left side elevation view, and a right elevation view showing a unit cover for a secured type constant velocity universal joint, Figs. 4 (a) and (b) are explanatory views showing a uniting method of the unit cover, Figs. 5 (a) and (b) are partially enlarged views showing a fastening portion of the unit cover, Figs. 6 (a) and (b) are partially enlarged views showing a fastening method of the unit cover, Figs. 7 (a), (b) and (c) are respectively a front elevation view, a left side elevation view, and a right elevation view showing a unit cover for a sliding type constant velocity universal joint, and Figs. 8 (a) and (b) are respectively a front elevation view and a left side elevation view showing a united unit cover.

The total bearing assembly for a driving wheel comprises a bearing apparatus for a driving wheel for transmitting a power from an engine to a wheel (not shown) and rotationally supporting the wheel relative to an suspension apparatus, a pair of constant velocity universal joints 3, 4 on which unit covers 7, 8 are mounted, and a drive shaft 5 connected to the constant velocity universal joints 3, 4. In addition the bearing assembly for a driving wheel is the so-called for generation type in which a hub wheel 1, a double row rolling bearing 2 and the constant velocity universal joint 3 are combined as a unit.

As shown in Fig. 2, the double row rolling bearing 2 comprises an outer member 9, an inner member 10 and double row balls 11a, 11b. The inner member comprises the hub wheel 1 and an outer joint member 16 inserted into the hub wheel 1.

The outer member 9 is made of medium carbon steel such as S53C including carbon of 0.40~0.80%by weight and integrally formed on its outer circumference with a body mounting flange 9c adapted to be mounted on a knuckle N and formed on its inner circumference with double row outer raceway surfaces 9a, 9b each having a circular arc cross-section. The double row outer raceway surfaces 9a, 9b are hardened by high frequency induction hardening as having 58~64 HRC.

The hub wheel 1 is made of medium carbon steel such as S53C including carbon of 0.40~0.80%by weight and has at its outer side end a wheel mounting flange 12 for mounting a wheel thereon and a plurality of hub bolts 13 equidistantly arranged along the periphery of the wheel mounting flange 12. The hub wheel 1 has on its outer circumference one inner raceway surface 1a arranged oppositely to outer side one (9a) of the double row outer raceway surfaces 9a, 9b and a cylindrical portion 1b axially extending from the inner raceway surface 1a. The hub wheel 1 is formed with a hardened layer having surface hardness 58-64 HRC by high frequency induction hardening from a seal land portion 12a on which an outer side seal 14 sliding contacts to the inner raceway surface 1a and the cylindrical portion 1b. This not only improves the anti-friction characteristics of the seal lad portion 12a at the base of the wheel mounting flange 12 but also improves the durability of the hub wheel 1 with providing with a sufficient mechanical strength against the rotary bending load applied to the wheel mounting flange 12.

The inner circumference of the hub wheel 1 is formed with an irregular portion 15 formed with a hardened layer having the surface hardness of HRC 54-64. It is preferable to carry out heat treatment using high frequency induction heating which can perform local heating and easily set the depth of hardened layer. The irregular portion 15 is formed as having a crisscross pattern knurl formed by combining a plurality of independent annular grooves formed by e.g. a lathe and a plurality of axial grooves formed by e.g. broaching as orthogonally crossed grooves or mutually inclined helical grooves. Each projection forming the irregular portion 15 may be pointed like a pyramid to increase the biting ability of the irregular portion 15 into the outer circumference of a fitting portion 22b of the outer joint member 16.

The constant velocity universal joint 3 comprises the outer joint member 16, a joint inner ring 17, a cage 18 and torque transmitting balls 19 and constructs a secured type (so-called "Zepper type") constant velocity universal joint. The outer joint member 16 is made of medium carbon steel such as S53C including carbon of 0.40∼0.80%by weight and comprises a cup shaped mouth portion 20, a shoulder portion 21 forming the bottom of the mouth portion 20, and a cylindrical shaft portion 22 axially extending from the shoulder portion 21 which are integrally formed each other. The shaft portion 22 is formed with a cylindrical spigot portion 22a fitted in the cylindrical portion 1b of the hub wheel 1 via a predetermined radial gap and a fitting portion 22b at the end of the spigot portion 22a.

An inner surface of the mouth portion 20 is formed with axially extending curved track grooves 20a and an outer circumference of the joint inner ring 17 is formed with track grooves 17a corresponding to the track grooves 20a. Torque transmitting balls 19 are contained between these track grooves 20a, 17a via a cage 18. An outer circumference of the shoulder portion 21 is formed with inner raceway surface 16a having a circular arc cross-section corresponding to one of the double row raceway surfaces 9a, 9b. A hardened layer having the surface hardness of HRC 58-64 is formed by high frequency induction heating on the track groove 20a and in a region from a seal land portion on which the inner side seal 23 sliding contacts to the inner raceway surface 16a and the shaft portion 22. The fitting portion 22b of the shaft portion 22 is remained as raw material itself without being hardened after having been forged.

Double row balls (rolling elements) 11a, 11b are arranged between the double row outer raceway surfaces 9a, 9b of the outer member 9 and corresponding double row inner raceway surfaces 1a, 16a and held freely rollably by cages 24a, 24b. Seals 14, 23 are arranged at annular openings formed between the outer member 9 and the inner member 10 in order to prevent leak of grease contained within the bearing as well as ingress of rain water or dusts into the inside of the bearing. End caps 25a, 25b are mounted on an outer side opening of the hub wheel 1 and on an opening of a shoulder 21 of the outer joint member 16 to prevent generation of rust on a connected portion via elastic deformation and also leakage of grease sealed in the mouth portion 20. The double row rolling bearing 2 is a double row angular ball bearing of a back-to-back duplex type.

Then a method for combining the hub wheel 1, the double row rolling bearing 2 and the constant velocity 3 as a unit will be described.
First of all the double row rolling elements 11a, 11b are temporally assembled on the double row raceway surfaces 9a, 9b of the outer member 9 via the cages 24a, 24b and seals 14, 23 are mounted on both ends of the outer member 9. Then the hub wheel 1 and the outer joint member 16 are inserted into the outer member 9 from both sides thereof. The shaft portion 22 of the outer joint member 16 is inserted into the hub wheel 1 until the shoulder portion 21 of the outer joint member 16 is abutted to the end face of the cylindrical portion 1b of the hub wheel 1. Then the hub wheel 1 and the outer joint member 16 are integrally connected each other by inserting a radially expanding tool such as a mandrel into the bore of the fitting portion 22b of the shaft portion 22, and plastically deforming and forcing the material of the fitting portion 22b to bite into the hardened irregular portion 15. Thus, the hub wheel 1 and the outer joint member 16 can be integrally connected each other. This makes it possible to reduce the size and weight of the wheel bearing apparatus and to improve the strength and durability of the hub wheel 1 as well as to maintain its pre-load for a long term.

Although it is shown the connection means via the plastic deformation between the hub wheel 1 and the outer joint member 16, other connection means such as serration means may be used or they can be axially secured by elastically deforming the end of the shaft portion 22 of the outer joint member 16 to form a so-called swing caulking.

In the illustrated embodiment of the present invention, a pitch circle diameter PCDi of the ball group 11b of the inner side row is larger than a pitch circle diameter PCDo of the ball group 11a of the outer side row. Since the outer diameter of each ball 11a is same as that of ball 11b, the number of balls 11b of the inner side row is set larger than that of balls 11a of the outer side row. This makes it possible to prevent erroneous assembly of the bearing apparatus and thus to reduce the manufacturing cost and to improve the quality of the bearing apparatus.

Due to the difference in the pitch circle diameter PCDo of balls 11a of the outer side row and the pitch circle diameter PCDi of balls 11b of the inner side row, the diameter of bottom of the inner raceway surface 16a of the outer joint member 16 is formed larger than that of the inner raceway surface 1a of the hub wheel 1. Similarly in the outer member 9, the diameter of bottom of the outer raceway surface 9b of the inner side is formed larger than that of the outer raceway surface 9a of the outer side.

In the bearing apparatus for a driving wheel having such a structure, since the inner raceway surface 16a of the inner side is directly formed on the outer circumference of the shoulder portion 21 of the outer joint member 16, it is possible to form the pitch circle diameter PCDi of the inner side ball row 11b larger than the pitch circle diameter PCDo of the outer side ball row 11a and also possible to set the number of inner side ball row 11b larger than that of outer side ball row 11a. Accordingly it is possible to reduce the weight and size of the total assembly of the bearing apparatus and to increase the bearing rigidity and thus to extend the life of the bearing assembly.

The joint assembly 6 shown in Fig. 1 comprises the pair of constant velocity universal joints 3, 4 and the drive shaft 5 connected to the constant velocity universal joints 3, 4. One end of the drive shaft 5 is inserted into the joint inner ring 17 of the outer side constant velocity universal joint 3 via a serration and the other end of the drive shaft 5 is connected to the constant velocity universal joint 4 of the sliding type (tripod type) connected to a differential apparatus (not shown).

The inner side constant velocity universal joint 4 comprises an outer joint member 26, a tripod member 27 on which three leg shaft 27a are equidistantly arranged, and rollers 29 rotationally mounted on the leg shaft 27a via needle rollers 28. The outer joint member 26 is a unitary body made of medium carbon steel including carbon of 0.40~0.80%by weight such as S53C and comprises a hollow cylindrical portion 30 and a shaft portion 31 axially extending from the bottom of the cylindrical portion 30. The shaft portion 31 is formed on its outer circumference with serration (or spline) 31a to be connected to the differential apparatus.

Three axially extending straight track grooves 30a are formed on the inner circumference of the cylindrical portion 30 and rollers 29 can roll on the track groove 30a. The surfaces of the track grooves 30a of the outer joint member 26 are hardened by high frequency induction quenching so as to form a predetermined hardened layer. An opening of the cylindrical portion 30 is covered by a boot 32 of synthetic rubber which prevents leakage of grease contained in the cylindrical portion 30 and ingress of rain water and dusts from outside and allows axial sliding of the drive shaft 5 relative to the outer joint member 26.

The configuration of the cylindrical portion 30 is not limited to a cylindrical configuration and may be a petal shaped cross-section corresponding to the track grooves 30a. The shaft portion 31 may be integrally formed with a mounting flange to be connected to the differential apparatus. Although it is shown an example of the inner side constant velocity universal joint 4 of a tripod type, any other sliding type constant velocity universal joint may be used for example as other tripod type having a different structure and a double offset type constant velocity universal joint (DOJ).

In the illustrated embodiment of the present invention, the outer diameter Da of a fitting surface 9d of the outer member 9 to be fitted into a knuckle N of a vehicle is formed larger than the maximum outer diameter Db, Dc respectively of the constant velocity universal joints 3, 4 (in this embodiment, the maximum outer diameter of a unit cover 7, 8 hereinafter described) (Da > Db□Dc). This enables not only to reduce the unsprung mass and accordingly to achieve easy assembly and disassembly to and from a body of vehicle but also to achieve easy insertion of the joint assembly 6 into the knuckle N and easy assembly of boots 33, 32 without being damaged by interference of the knuckle N.

According to the present invention, a cylindrical unit covers 7, 8 are mounted on the pair of constant velocity universal joints 3, 4 respectively for covering the outer circumference thereof. The unit covers 7, 8 are made by injection molding of elastomer such as PA (polyamide) 66 and formed of a two piece symmetrical structure separated along a parting plane including the longitudinal axis. The unit covers 7, 8 have at their opposite ends reduced diameter portions 7a, 8a adapted to be fitted on the outer joint members 16, 26 and boots 33, 32. The material of the unit covers 7, 8 are not limited to PA 66 and may be any other elastic material having elasticity and rigidity suitable for mountability such as urethane resin e.g. PP (polypropylene), rigid urethane or expandable urethane.

The unit cover 7 of these unit covers 7, 8 to be mounted on the outer side constant velocity universal joint 3 has, as shown in Fig. 3, the reduced diameter portion 7a of a tapered configuration formed along an outline of the boot 33 and flat abutting surfaces 7b, 7c integrally formed on its both ends. In these abutting surfaces 7b, 7c, the abutting surface 7b of a larger diameter side is formed with recess/projection portions 34 and the abutting surface 7c of the reduced diameter side 7a is formed with a hook portion 35 and recess/projection portions 36.

Then the fastening structure of the abutting surfaces 7b, 7c will be described in detail with reference to examples in the reduced diameter side 7a shown in Figs. 4-6. As shown in Fig. 4, hook portions 35a, 35b are formed on the abutting surfaces 7c at their outer circumferential edges of the two piece unit cover 7 and the recess/projection portions 36 are formed on the abutting surfaces 7c at substantially center thereof. The hook portions 35a, 35 b and the projection 36a and the recess 36b are formed one by one on the abutting surfaces 7c, 7c. This enables to easily separate the unit cover 7 since the hook portions 35a, 35b are formed at positions axially offset each other as shown in Fig. 6 and accordingly the hook portions 35a, 35b occupy a relative position when the abutting surfaces 7c, 7c are abutted. On the other hand unexpected separation of the unit cover 7 can be surely prevented due to engagement of the projection 36a and the recess 36b via elastic deformation therebetween.

As shown in Fig. 5, the projection (projected portion) 36a is formed as a hollow configuration and its tip end 37 is radially expanded, on the other hand, the recess (recessed portion) 36b is formed with an annular groove 38a at a substantially center of an inner diameter portion 38. Accordingly the tip 37 of the projection 36a is adapted to be fitted into the annular groove 38a with the tip 37 elastically expanding the inner diameter portion 38. That is, an outer diameter "a1" of the base of the projection 36a is formed smaller than an inner diameter "b1" of the inner diameter portion 38 of the recess 36b (a1 < b1), an outer diameter "a2" of the tip 37 of the projection 36a is formed slightly smaller than an inner diameter "b2" of the annular groove 38a of the recess 36b (a2 < b2), and the outer diameter "a2" of the tip 37 of the projection 36a is formed larger than the inner diameter "b1" of the inner diameter portion 38 of the recess 36b (a2 > b1).

As described above, in the preferable embodiment of the present invention, since the two piece unit cover 7 is formed with hook portions 35a, 35b and recess/projection portions 36 on the abutting surfaces 7c and they can be engaged each other using the elastic deformation of the recess/projection portions 36, it is possible to easily separate the two piece unit cover only by pushing out the hook portions and thus to improve the workability in assembly and separation of the unit cover. In addition, since each of said unit covers is formed as having a symmetrical configuration, it is possible to use only one set of molds for manufacturing the unit cover and thus to further reduce manufacturing cost and improve the workability in assembly

The unit cover 8 of these unit covers 7, 8 to be mounted on the inner side constant velocity universal joint 4 has, as shown in Fig. 7, the reduced diameter portion 8a of a tapered configuration formed along an outline of the boot 32 and flat abutting surfaces 8b, 8c integrally formed on its both ends. Same reference numerals are used herein as those used in the unit cover 7 of Fig. 3 and detailed description of them will be omitted. Hook portions 35a, 35b are formed on the outer circumferential edges of abutting surfaces 8b, 8c and recess/projection portions 36 are formed on substantially center of the abutting surfaces 8b, 8c. The recess/projecting portion 36 comprising a projection 36a and recess 36b.

The pair of unit covers 8 can be united by abutting the surfaces 8c, 8c and engaging the projections 36a and the recesses 36b each other using their elasticity. In the illustrated embodiment, it is shown that both the hook portions 35a, 35b and the recess/projection portions 36 are formed on the abutting surfaces 7c, 8b, 8c, it may be possible to omit the hook portions and to form only the recess/projection portions 36.

According to the present invention since the two piece type unit covers 7, 8 are mounted on the pair of constant velocity universal joints 3, 4 and the outer circumference of the joint assembly 6 is covered by these unit covers 7, 8, it is possible to protect the joint assembly 6 and to prevent the total bearing assembly from being hung down by its own weight during its transportation or handling and thus to further improve handling of the total bearing assembly for a driving wheel.

In addition, since the outer diameter Da of a fitting surface 9d of the outer member 9 is formed larger than maximum outer diameters Db, Dc of the joint assemblies 3, 4 and the reduced diameter portions 7a, 8a of the unit covers 7, 8 are formed as a tapered configuration, it is possible to easily fit the joint assembly 6 into the knuckle N without being damaged, to prevent adhesion of contamination to the total assembly of the bearing and to keep the total assembly in a mounted condition to the knuckle N until completion of assembly corner modules of suspension apparatus and a vehicle. Thus it is possible to further improve not only the handling such as transportation but also the workability in assembly.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The unit cover of the present invention can be applied to a joint assembly comprising a pair of constant velocity universal joint and a drive shaft, and to a total bearing assembly for a driving wheel having the joint assembly and united arrangement of a hub wheel, a double row rolling bearing and a constant velocity universal joints.

### Brief Description of Drawings

[Fig. 1] A longitudinal section view showing one embodiment of a total assembly of bearing apparatus for a driving wheel on which a unit cover of the present invention is mounted;
[Fig. 2] A longitudinal section view showing a bearing apparatus for a driving wheel;
[Figs. 3] (a), (b) and (c) are respectively a front elevation view, a left side elevation view, and a right elevation view showing a unit cover for a secured type constant velocity universal joint;
[Figs. 4] (a) and (b) are explanatory views showing a uniting method of the unit cover;
[Figs. 5] (a) and (b) are partially enlarged views showing a fastening portion of the unit cover;
[Figs. 6] (a) and (b) are partially enlarged views showing a fastening method of the unit cover;
[Figs. 7] (a), (b) and (c) are respectively a front elevation view, a left side elevation view, and a right elevation view showing a unit cover for a sliding type constant velocity universal joint;
[Figs. 8] (a) and (b) are respectively a front elevation view and a left side elevation view showing a united unit cover; and
[Fig. 9] A longitudinal section view showing a bearing apparatus for a driving wheel on which a unit cover of the prior art is mounted.

### Explanation of Reference numerals and Characters

- 1.........: hub wheel
- 1a, 16a.........: inner raceway surface
- 2.........: double row rolling bearing
- 3, 4: constant velocity universal joint
- 5.........: drive shaft
- 6.........: joint assembly
- 7.........: unit cover of secured type constant velocity universal joint side
- 7a, 8a.........: reduced diameter portion
- 7b, 8b.........: abutting surface on a larger diameter side
- 7c, 8c.........: abutting surface on a reduced diameter side
- 8.........: unit cover of sliding type constant velocity universal joint side
- 9.........: outer member
- 9a, 9b.........: outer raceway surface
- 9c.........: body mounting flange
- 9d.........: fitting surface
- 10.........: inner member
- 11a.........: outer side ball
- 11b.........: inner side ball
- 12.........: wheel mounting flange
- 12a.........: seal land portion
- 13.........hub: bolt
- 14.........: outer side seal
- 15.........: irregular portion
- 16, 26.........: outer joint member
- 17.........: joint inner ring
- 17a, 20a, 30a.........: track groove
- 18.........: cage
- 19.........: torque transmitting ball
- 20.........: mouth portion
- 21.........: shoulder portion
- 22, 31.........: shaft portion
- 22a.........: spigot portion
- 22b.........: fitting portion
- 23.........: inner side seal
- 24a.........: outer side cage
- 24b.........: inner side cage
- 25a, 25b.........: end cap
- 27.........: tripod member
- 27a.........: leg shaft
- 28.........: needle roller
- 29.........: roller
- 30.........: outer cylindrical portion
- 31a.........: serration
- 32, 33.........: boot
- 34, 36.........: recess/projection portion
- 34a, 36a.........: projection (projected portion)
- 34b, 36b.........: recess (recessed portion)
- 35a, 35b.........: hook portion
- 37.........: tip
- 38.........: inner diameter portion
- 38a.........: annular groove
- 51.........: hub wheel
- 51a, 60a.........: inner raceway surface
- 52.........: double row rolling bearing
- 53.........: secured type constant velocity universal joint
- 54.........: wheel mounting flange
- 55.........: irregular portion
- 56.........: ball
- 57.........: outer member
- 57a.........: outer raceway surface
- 57b.........: body mounting flange
- 57c.........: fitting surface
- 58.........: inner member
- 60, 69.........: outer joint member
- 61.........: joint inner ring
- 62.........: cage
- 63.........: torque transmitting ball
- 64.........: mouth portion
- 65.........: shoulder portion
- 66.........: shaft portion
- 66a.........: cylindrical portion
- 66b.........: fitting portion
- 67.........: drive shaft
- 68, 70.........: boot
- 71.........: sliding type constant velocity universal joint
- 72.........: unit cover
- 72a, 72b.........: reduced diameter portion
- a1.........: outer diameter of base of projection
- a2.........: outer diameter of tip of projection
- b1.........: inner diameter of recess
- b2.........: inner diameter of annular groove of recess
- Da.........: outer diameter of fitting surface of outer member
- Db.........: maximum diameter of secured type constant velocity universal joint
- Dc.........: maximum diameter of sliding type constant velocity universal joint
- JA.........: joint assembly
- N.........: knuckle

## Claims

1. A joint assembly (6) comprising a secured type constant velocity universal joint (3), a slide type constant velocity universal joint (4), and substantially cylindrical unit covers (7, 8) of elastomer in which:
the secured type constant velocity universal joint (3) includes one outer joint member (16) formed on its inner circumference with a plurality of curved and axially extending track grooves (20a); a joint inner ring (17) formed on its outer circumference with track grooves (17a) oppositely to the track grooves (20a); torque transmitting balls (19) contained within ball tracks formed by the track grooves (17a, 20a); a cage (18) for rollably holding the torque transmitting balls (19) within the ball tracks;
a drive shaft (5) one end of which being connected to the joint inner ring (17), and a boot (33) mounted on the drive shaft (5) and on an outer circumference at an opened side of said one outer joint member (16);
the slide type constant velocity universal joint (4) including a boot (32) mounted on said drive shaft (5) and on an outer circumference at an opened side of the outer joint member (26); and
the unit covers (7, 8) having reduced diameter portions and being mounted on the outer circumferences of both the constant velocity universal joints (3, 4) **characterized in:**
**that** each of the unit covers (7, 8) is formed as two parts divided along a parting plane including its axis and has radially extending flat abutting surfaces (7b, 7c; 8b, 8c) on the parting plane, and that fastening portions (34, 36) formed on the abutting surfaces (7b, 7c; 8b, 8c) and
adapted to be engaged via a elastic deformation of them so that the unit covers (7, 8) are detachably mounted on both the constant velocity universal joints (3, 4).

2. A joint assembly (6) of claim 1 wherein each of said fastening portions (36) comprises a projected portion (36a) having a tip (37) of enlarged diameter and a recessed portion (36b) having annular groove (38a) formed at a substantially center of an inner diameter portion (38), and wherein the tip (37) of the projection (36a) is adapted to be fitted into the annular groove (38a) with the tip (37) elastically expanding the inner diameter portion (38).

3. A joint assembly (6) of claim 1 or 2 wherein hooks (35a, 35b) are formed on the outer circumstances of the abutting surfaces (8b, 8c), wherein the hooks (35a) and the hooks (35b) are arranged at axially offset positions each other.

4. A joint assembly (6) of any one of claims 1-3 wherein each of said unit covers (7, 8) is formed as having a symmetrical configuration.

5. A total assembly of a bearing apparatus for a driving wheel comprising a bearing apparatus for a driving wheel formed as a unit of a hub wheel (1), a double row rolling bearing (2), a constant velocity universal joint (3) and an outer joint member (16) integrally connected to the hub wheel (1) via plastic deformation therebetween; and a joint assembly (6) of any one of claims 1-4 connected to the bearing apparatus for a driving wheel in which said double row rolling bearing (2) including:
an outer member (9) integrally formed on its outer circumstance with a body mounting flange (9c) to be mounted on a knuckle (N) and a fitting surface fitted into the knuckle (N) and on its inner circumstance with double row outer raceway surfaces (9a, 9b);
an inner member (10) comprising the hub wheel (1) integrally formed at its one end with a wheel mounting flange (12) and on its outer circumference with an inner raceway surface (1a) opposed to one (9a) of the double row outer raceway surfaces (9a, 9b), and the outer joint member (16) of the constant velocity universal joint (3) integrally formed with a hollow shaft portion (22) fitted into the hub wheel (1) and on its outer circumference with an inner raceway surface (16a) opposed to the other one (9b) of the double row outer raceway surfaces (9a, 9b), and
double rows of rolling elements (11a, 11b) freely rollably contained between the inner member (10) and the outer member (9) **characterized in:**
**that** a pitch circle diameter (PCDi) of an inner side row of rolling elements (11b) of the double rows of rolling elements (11a, 11b) is set larger than that (PCDo) of an outer side row of rolling elements (11a); and that an outer diameter (Da) of a fitting surface (9d) of the outer member (9) is formed larger than maximum outer diameters (Db, Dc) of the joint assembly (6).

## Patentansprüche

1. Gelenkanordnung (6), umfassend ein Gleichlaufgelenk (3) vom befestigten Typ, ein Gleichlaufgelenk (4) vom gleitenden Typ und im Wesentlichen zylinderförmige Einheitsabdeckungen (7, 8) aus einem Elastomer, wobei
das Gleichlaufgelenk (3) vom befestigten Typ ein äußeres Gelenkelement (16), das an seinem Innenumfang mit mehreren gekrümmten und sich axial erstreckenden Bahnrillen (20a) ausgeführt ist; einen Gelenkinnenring (17), der an seinem Außenumfang mit Bahnrillen (17a) ausgeführt ist, die den Bahnrillen (20a) gegenüberliegen; drehmomentübertragende Kugeln (19), die in Kugelbahnen, welche durch die Bahnrillen (17a, 20a) gebildet sind, enthalten sind; einen Käfig (18), um die drehmomentübertragenden Kugeln (19) wälzfähig in den Kugelbahnen zu halten; eine Antriebswelle (5), wovon ein Ende mit dem Gelenkinnenring (17) verbunden ist, und ein Faltenbalg (33), der an der Antriebswelle (5) und an einem Außenumfang an einer geöffneten Seite des einen äußeren Gelenkelements (16) angebracht ist, umfasst;
das Gleichlaufgelenk (4) vom gleitenden Typ einen Faltenbalg (32), der an der Antriebswelle (5) und an einem Außenumfang an einer geöffneten Seite des äußeren Gelenkelements (26)angebracht ist, umfasst; und
die Einheitsabdeckungen (7, 8) Abschnitte mit einem verringerten Durchmesser aufweisen und an den Außenumfängen beider Gleichlaufgelenke (3, 4) angebracht sind,
**dadurch gekennzeichnet, dass**
jede der Einheitsabdeckungen (7, 8) als zwei Teile ausgeführt ist, die entlang einer Trennebene, welche ihre Achse enthält, getrennt sind, und an der Trennebene sich radial erstreckende flache Anliegeflächen (7b, 7c; 8b, 8c) aufweist, und dass Befestigungsabschnitte (34, 36) an den Anliegeflächen (7b, 7c; 8b, 8c) gebildet sind und dazu geeignet sind, über ihre elastische Verformung in Eingriff gebracht zu werden, so dass die Einheitsabdeckungen (7, 8) an beiden Gleichlaufgelenken (3, 4) abnehmbar angebracht sind.

2. Gelenkanordnung (6) nach Anspruch 1, wobei jeder der Befestigungsabschnitte (36) einen vorspringenden Abschnitt (36a) mit einer Spitze (37) mit einem vergrößerten Durchmesser und einen vertieften Abschnitt (36b) mit einer ringförmigen Nut (38a), die in einer wesentlichen Mitte eines Innendurchmesserabschnitts (38) gebildet ist, umfasst, und wobei die Spitze (37) des Vorsprungs (36a) dazu geeignet ist, in die ringförmige Nut (38a) gepasst zu werden, wobei die Spitze (37) den Innendurchmesserabschnitt (38) elastisch ausdehnt.

3. Gelenkanordnung (6) nach Anspruch 1 oder 2, wobei an den Außenumfängen der Anliegeflächen (8b, 8c) Haken (35a, 35b) gebildet sind, wobei die Haken (35a) und die Haken (35b) an axial versetzten Positionen zueinander angeordnet sind.

4. Gelenkanordnung (6) nach einem der Ansprüche 1 bis 3, wobei jede der Einheitsabdeckungen (7, 8) so ausgeführt ist, dass sie eine symmetrische Gestaltung aufweist.

5. Gesamte Lagervorrichtungsanordnung für ein Antriebsrad, umfassend eine Lagervorrichtung für ein Antriebsrad, die als eine Einheit aus einer Radnabe (1), einem zweireihigen Wälzlager (2), einem Gleichlaufgelenk (3) und einem äußeren Gelenkelement (16), das über eine dazwischen erfolgende plastische Verformung einstückig mit der Radnabe (1) verbunden ist, umfasst; und eine Gelenkanordnung (6) nach einem der Ansprüche 1 bis 4, die mit der Lagervorrichtung für ein Antriebsrad verbunden ist, wobei das zweireihige Wälzlager (2) Folgendes umfasst:
ein äußeres Element (9), das einstückig an seinem Außenumfang mit einem Aufbauanbringungsflansch (9c) zur Anbringung an einem Achsschenkel (N) und einer Passfläche, die in den Achsschenkel (N) gepasst ist, und an seinem Innenumfang mit zwei Reihen von äußeren Laufringflächen (9a, 9b) ausgeführt ist;
ein inneres Element (10), das die Radnabe (1) umfasst und einstückig an seinem einen Ende mit einem Radanbringungsflansch (12) und an seinem Außenumfang mit einer inneren Laufringfläche (1a), die einer (9a) der zwei Reihen von äußeren Laufringflächen (9a, 9b) gegenüberliegt, ausgeführt ist, wobei das äußere Gelenkelement (16) des Gleichlaufgelenks (3) einstückig mit einem hohlen Wellenabschnitt (22), der in die Radnabe (1) gepasst ist, und an seinem Außenumfang mit einer inneren Laufringfläche (16a), die der anderen (9b) der zwei Reihen von äußeren Laufringflächen (9a, 9b) gegenüberliegt, ausgeführt ist, und
zwei Reihen von Wälzelementen (11a, 11b), die frei wälzfähig zwischen dem inneren Element (10) und dem äußeren Element (9) enthalten sind,
**dadurch gekennzeichnet, dass**
ein Teilkreisdurchmesser (PCDi) einer innenseitigen Reihe von Wälzelementen (11b) der zwei Reihen von Wälzelementen (11a, 11b) größer als jener (PCDo) einer außenseitigen Reihe von Wälzelementen (11a) eingerichtet ist; und dass ein Außendurchmesser (Da) einer Passfläche (9d) des äußeren Elements (9) größer als die maximalen Außendurchmesser (Db, Dc) der Gelenkanordnung (6) eingerichtet ist.

## Revendications

1. Ensemble de joints (6) comprenant un joint universel fixe (3) du type à vitesse constante, un joint universel coulissant (4) du type à vitesse constante et des couvertures d'ensemble (7, 8) sensiblement cylindriques, en élastomère, ensemble de joints dans lequel :
le joint universel fixe (3) du type à vitesse constante comprend un élément de joint extérieur (16) formé sur sa circonférence intérieure et comportant une pluralité de gorges de piste (20a) courbes et s'étendant axialement ;
une bague intérieure de joint (17) formée sur sa circonférence extérieure et comportant des gorges de piste (17a) placées à l'opposé des gorges de piste (20a) ; des billes de transmission de couple (19) contenues à l'intérieur de pistes à billes formées par les gorges de piste (17a, 20a) ; une cage (18) pour que les billes de transmission de couple (19) continuent à rouler à l'intérieur des pistes à billes ; un arbre de transmission (5) dont une extrémité est reliée à la bague intérieure de joint (17), et un soufflet (33) monté sur l'arbre de transmission (5) et sur une circonférence extérieure, au niveau d'un côté ouvert dudit élément de joint extérieur (16) ;
le joint universel coulissant (4) du type à vitesse constante comprenant un soufflet (32) monté sur ledit arbre de transmission (5) et sur une circonférence extérieure, au niveau d'un côté ouvert de l'élément de joint extérieur (26) ; et
les couvertures d'ensemble (7, 8) ayant des parties de diamètre réduit et qui sont montées sur les circonférences extérieures des deux joints universels (3, 4) à vitesse constante, **caractérisé**
**en ce que** chacune des couvertures d'ensemble (7, 8) est formée en deux parties divisées le long d'un plan de séparation englobant son axe, et a des surfaces (7b, 7c ; 8b, 8c) venant en butée à plat sur le plan de séparation et s'étendant radialement, et en ce que des parties de fixation (34, 36) sont formées sur les surfaces (7b, 7c ; 8b, 8c) venant en butée et adaptées pour être engagées par leur déformation élastique, de sorte que les couvertures d'ensemble (7, 8) sont montées de façon détachable sur les deux joints universels (3, 4) à vitesse constante.

2. Ensemble de joints (6) selon la revendication 1, dans lequel chacune desdites parties de fixation (36) comprend une partie en saillie (36a) ayant une extrémité (37) de diamètre augmenté et une partie en creux (36b) ayant une gorge annulaire (38a) formée sensiblement au centre d'une partie de diamètre intérieur (38), et dans lequel l'extrémité (37) de la partie en saillie (36a) est adaptée pour être ajustée dans la gorge annulaire (38a), l'extrémité (37) dilatant élastiquement la partie de diamètre intérieur (38).

3. Ensemble de joints (6) selon la revendication 1 ou 2, dans lequel des crochets (35a, 35b) sont formés sur les circonférences extérieures des surfaces (8b, 8c) venant en butée, dans lequel les crochets (35a) et les crochets (35b) sont agencés au niveau de positions décalées axialement l'une par rapport à l'autre.

4. Ensemble de joints (6) selon l'une quelconque des revendications 1 à 3, dans lequel chacune desdites couvertures d'ensemble (7, 8) est formée en ayant une configuration symétrique.

5. Ensemble total d'un dispositif à roulements pour une roue motrice comprenant un dispositif à roulements, pour une roue motrice formée comme un ensemble constitué d'une roue à moyeu (1), d'un palier à roulement (2) à double rangée, d'un joint universel (3) à vitesse constante et d'un élément de joint extérieur (16) relié de façon solidaire à la roue à moyeu (1) par une déformation plastique entre les deux composants ; et un ensemble de joints (6) selon l'une quelconque des revendications 1 à 4, relié au dispositif à roulements pour une roue motrice dans laquelle ledit palier à roulement (2) à double rangée comprend :
un élément extérieur (9) formé, sur sa circonférence extérieure, de façon solidaire avec une bride de support de caisse (9c) devant être montée sur une genouillère (N) et sur une surface de montage ajustée dans la genouillère (N), et comprenant, sur sa circonférence intérieure, des surfaces (9a, 9b) de chemins de roulement extérieurs à double rangée ;
un élément intérieur (10), comprenant la roue à moyeu (1), formé au niveau de l'une de ses extrémités, de façon solidaire avec une bride de fixation (12) de la roue, et comprenant, sur sa circonférence extérieure, une surface (1a) de chemin de roulement intérieur opposée à l'une (9a) des surfaces (9a, 9b) de chemins de roulement extérieurs à double rangée, et l'élément de joint extérieur (16) du joint universel (3) à vitesse constante formé de façon solidaire avec une partie d'arbre creux (22) montée dans la roue à moyeu (1), et comprenant, sur sa circonférence extérieure, une surface de chemin de roulement intérieur (16a) opposée à l'autre surface (9b) concernant les surfaces (9a, 9b) de chemins de roulement extérieurs à double rangée,
et
des doubles rangées d'éléments de roulement (11a, 11b) pouvant rouler librement et contenus entre l'élément intérieur (10) et l'élément extérieur (9), **caractérisé en ce qu'**un diamètre du cercle primitif (PCDi) d'une rangée, côté intérieur, d'éléments de roulement (11b) des doubles rangées d'éléments de roulement (11a, 11b) est fixé en étant plus grand que celui (PCDo) d'une rangée, côté extérieur, d'éléments de roulement (11a) ; et **en ce qu'**un diamètre extérieur (Da) d'une surface de montage (9d) de l'élément extérieur (9) est formé en étant plus grand que des diamètres extérieurs maximaux (Db, Dc) de l'ensemble de joints (6).
